# EUROPÄISCHE PATENTANMELDUNG

(11) **EP 0 716 281 A2**
(43) Veröffentlichungstag der Anmeldung: **12.06.1996**
(21) Anmeldenummer: 95116107.4
(22) Anmeldetag: 12.10.1995
(51) Int. Cl.: F25J 3/08

(54) **Verflüssigungsvorrichtung und Verfahren unter Verwendung derselben**

(30) Priorität: 12.10.1994 DE 4436384
(71) Anmelder: BRESCH ENTSORGUNG GmbH, D-24539 Neumünster (DE)
(72) Erfinder: Landahl, Claus-Dieter, D-24626 Gross Kummerfeld (DE); Landahl, Horst, D-22339 Hamburg (DE); Mantei, Ronald, D-22043 Hamburg (DE)

(57) **Zusammenfassung**

Die vorliegende Erfindung betrifft eine Verflüssigungsvorrichtung zur Verflüssigung von Gasen aus Gasgemischen, die einen separaten Kühlkreislauf zur Abkühlung eines Kältemittels aufweist und ein Kühlsystem, das wenigstens einen Vorkühler und wenigstens zwei Tiefkühler aufweist, wobei das Kältemittel zur Kühlung der Tiefkühler mit einer Temperatur von - 55 bis - 115 °C eingesetzt wird und das ein Leitungs- und Ventilsystem aufweist, welches das Auftauen eines Tiefkühlers ohne Verlust an zu verflüssigendem Gas bei gleichzeitigem Betrieb des zweiten Tiefkühlers ermöglicht.

## Beschreibung

Die vorliegende Erfindung betrifft eine Verflüssigungsvorrichtung zur Verflüssigung von Gasen aus Gasgemischen, die einen separaten Kühlkreislauf zur Abkühlung eines Kältemittels aufweist und ein Kühlsystem, das wenigstens einen Vorkühler und wenigstens zwei Tiefkühler aufweist, wobei das Kältemittel zur Kühlung der Tiefkühler mit einer Temperatur von - 55 bis - 115 °C eingesetzt wird und das ein Leitungs- und Ventilsystem aufweist, welches das Auftauen eines Tiefkühlers ohne Verlust an zu verflüssigendem Gas bei gleichzeitigem Betrieb des zweiten Tiefkühlers ermöglicht.

Die Verflüssigung von Gasen wird im großen Umfang beispielsweise durch Komprimieren, Abführen der Kompressionswärme und Abkühlung unter Entspannung technisch durchgeführt, sofern man sich unterhalb der kritischen Temperatur des verflüssigenden Gases befindet. Auf diese Weise werden insbesondere flüssiger Sauerstoff und flüssiger Stickstoff gewonnen.

Während der letzten Jahre hat auch die Verflüssigung von Fluor enthaltenden Kohlenwasserstoffen große Bedeutung erfangt, da auf diese Weise das Entweichen von FCKW's in die Atmosphäre vermieden werden kann. Bekanntlich haben FCKW's die Wirkung, daß sie in der Stratosphäre die Ozonschicht zerstören.

FCKW's wurden und werden in großem Umfang als Treibmittel zur Erzeugung von Polyurethanschäumen eingesetzt. Diese Schäume dienen u.a. als Isoliermaterialien in Kühlaggregaten, insbesondere Kühlschränken und Kühltruhen oder Klimaanlagen. Eine wichtige Aufgabenstellung ist die Rückgewinnung der FCKW's aus den Schäumen der Altkühlaggregate. Hierbei werden die Schäume zerkleinert und die freigesetzten FCKW's verflüssigt durch Abkühlung und Druckerhöhung. Als Kältemittel wurde bisher überwiegend Fluortrichlormethan eingesetzt, das jedoch aufgrund seiner ebenfalls schädigenden Wirkung auf die Ozonschicht inzwischen in der Bundesrepublik Deutschland nicht mehr als Kältemittel zugelassen ist.

Ein Verflüssigungsverfahren für FCKW's mit Hilfe von zwei Kühlstufen ist in der EP-A-0336254 offenbart.

Auch in der EP-A-0383228 ist die stufenweise Kondensation von FCKW's beschrieben.

Auch gemäß G 8815199 werden aus Polyurethanschäumen freigesetzte FCKW's durch Verdichten und Abkühlen verflüssigt.

Ein Verfahren zur Verflüssigung von FCKW's ist auch in der DE 4133916 A1 offenbart. Nach diesem Verfahren wird zweistufig gekühlt, in der ersten Stufe ein Wasser-/FCKW-Gemisch abgetrennt und in der zweiten Stufe die FCKW's weitgehend verflüssigt.

Trotz der Bemühungen der Fachwelt weisen die derzeitigen technischen Anlagen noch immer Schwachstellen auf, wobei beispielsweise während der Auftauphase eines Verflüssigungskühlers kein vollständiges Erfassen der FCKW's in der Anlage möglich ist, so daß unerwünschte Emissionen auftreten. Hinzu kommt, daß das bisherige, am häufigsten eingesetzte Kältemittel Fluortrichlormethan durch ein umweltfreundliches Material ersetzt werden muß.

Der Anmelderin ist es nunmehr gelungen, entscheidende Verbesserungen zu erzielen durch eine Verflüssigungsvorrichtung zur Verflüssigung von Gasen aus Gasgemischen, die einen separaten Kühlkreislauf zur Abkühlung eines Kältemittels aufweist, ferner ein Kühlsystem, das vom abzukühlenden Gasgemisch durchströmt wird und einen mit einem Kältemittel gekühlten Vorkühler zur Vorkühlung des Gasgemisches und einen Tiefkühler zur Verflüssigung von Gasen aufweist sowie einen Wärmetauscher aufweist, der dem Vorkühler vorgeschaltet ist und der von aus dem Kühlsystem ausströmendem kaltem Gas und im Gegenstrom von in das Kühlsystem eintretendem Gasgemisch durchströmt wird, dadurch gekennzeichnet, daß im Kühlsystem wenigstens zwei voneinander unabhängig betreibbare Tiefkühler vorhanden sind, daß die Tiefkühler unabhängig voneinander mit vorgekühltem oder mit ungekühltem Einsatzgasgemisch befahrbar sind und daß ein Leitungs- und Ventilsystem vorliegt, welches das Auftauen eines Tiefkühlers ohne Verlust an zu verflüssigendem Gas bei gleichzeitigem Betrieb des zweiten Tiefkühlers ermöglicht.

Die vorliegende Erfindung betrifft ferner ein Verfahren unter Verwendung der Verflüssigungsvorrichtung zur Verflüssigung von Gasen aus Gasgemischen, bei dem in einem separatem Kühlkreislauf Kältemittel abgekühlt wird, das zur Verflüssigung von Gasen aus Gasgemischen dient und das abzukühlende Gasgemisch durch ein Kühlsystem geleitet wird, wobei dieses durch einen Vorkühler und einen Tiefkühler und ggf. durch einen dem Vorkühler vorgeschalteten Wärmetauscher strömt, durch den im Gegenstrom kaltes Gas aus dem Kühlsystem strömt, dadurch gekennzeichnet, daß die Kühlung des Gasgemisches in den Tiefkühlern mit dem Kältemittel erfolgt, welches aus dem separaten Kühlkreislauf in die Tiefkühler mit einer Temperatur von - 55 bis - 115 °C geleitet wird und daß das Gasgemisch nach Vorkühlung in wenigstens einem Vorkühler durch zwei oder mehrere voneinander unabhängig betreibbare Tiefkühler strömt, daß zum Abtauen von wenigstens einem Tiefkühler Einsatzgasgemisch ohne bzw. mit nur geringem vorherigem Wärmetausch direkt den abzutauenden Tiefkühler durchströmt und anschließend durch den Vorkühler in wenigstens einen in Betrieb befindlichen Tiefkühler strömt und daß nach Abtrennung des Flüssiggases das Restgas aus dem Kühlsystem austritt.

Mittels dieser Verflüssigungsvorrichtung und mittels diesem Verfahren ist es möglich, aus Gasgemischen, insbesondere FCKW/Luftgemischen die FCKW's vollständig aus Kühlaggregaten oder sonstigen Anlagen, die FCKW-geschäumte Materialien enthalten, zurückzugewinnen. Der wichtigste Fluorchlorkohlenwasserstoff, der auf diese Weise zurückgewonnen wird, ist Fluortrichlormethan (R 11). Gegebenenfalls können jedoch auch andere Treibmittel erfindungsgemäß zurückgewonnen werden.

Die Verflüssigungsvorrichtung weist einen separaten Kühlkreislauf auf, in dem ein als Ersatzkältemittel für Fluortrichlormethan geeignetes Kältemittel zur Verflüssigung von FCKW's aus einem FCKW/Luftgemisch eingesetzt wird. Die Anmelderin hat gefunden, daß ein besonders gut geeignetes Kältemittel Trifluormethan (R 23) ist. Der Kühlkreislauf ist bevorzugt zweistufig. Hierbei wird in einem ersten Kühlkreislauf ein Kältemittel mittels eines Kompressors verdichtet, die Kompressionswärme abgeführt und durch Entspannen eine Temperatur von - 15 bis - 25 °C, bevorzugt von - 17 bis - 23 °C erreicht. Das kalte Gas gibt in einem Wärmetauscher die Kälte an das Kältemittel ab, das in einem zweiten Kühlkreislauf fließt. Ein geeignetes Kältemittel im ersten Kühlkreislauf wird aus der Gruppe CF₃-CH₂F, CH₃-CHF-CF₃, CF₃-CHF₂, CH₂F₂ und CF₃CH₃ oder aus deren Gemischen ausgewählt. Ein gut geeignetes Gemisch ist beispielsweise CH₂-CF₃/CH₃-CF₃/CHF₂-CF₃.

Der Kompressor verdichtet das Kältemittel auf 15 bis 30 bar, bevorzugt auf 19 bis 23 bar. Hierbei tritt eine Erwärmung auf 60 bis 100 °C ein, im allgemeinen auf 75 bis 85 °C. Die Wärme kann in einem Wasserkühler abgeführt werden.

Im zweiten Kühlkreislauf befindet sich ebenfalls ein Kompressor, der das Kältemittel, insbesondere Trifluormethan, auf 10 bis 20 bar, bevorzugt 10 bis 15 bar, z.B. auf 11, 12, 13 oder 14 bar komprimiert. Hierbei erwärmt sich das Gas auf 80 bis 100 °C und gelangt in den mit dem ersten Kühlkreislauf gemeinsamen Wärmetauscher. Am Ausgang besitzt das Kältemittel eine Temperatur von ca. - 20 °C und wird nun in die Tiefkühler des Kühlsystems zur Verflüssigung von Gas aus Gasgemischen entspannt. Hierbei kühlt es sich auf - 55 bis - 115 °C, bevorzugt auf - 60 bis - 80 °C, z.B. - 65, - 70 oder - 75 °C ab.

Nach Austritt aus dem Tiefkühler strömt das Kältemittel zurück zum Kompressor. Bei Störungen, z.B. bei Ausfall des ersten Kühlkreislaufes kann das R 23 über ein Druckhalteventil in ein Ausgleichsgefäß strömen, wobei dieses so dimensioniert ist, daß im Kreislauf kein unerwünschter Überdruck auftritt.

Im eigentlichen Kühlsystem, in dem gasförmiges Treibmittel aus einem Gasgemisch, insbesondere R 11 aus R 11/Luftgemisch verflüssigt und damit abgetrennt wird, tritt das Gasgemisch über einen Wasserabscheider in einen Verdichter ein.

Der Kompressor verdichtet das Gasgemisch auf 3 bis 12 bar, bevorzugt auf 6 bis 8 bar. Hinter dem Kompressor befindet sich bevorzugt ein weiterer Wasserabscheider. Das komprimierte Gas strömt nun durch einen Wärmetauscher, in dem im Gegenstrom kaltes Gas aus dem Kühlsystem nach außen fließt. Das austretende Gas, das praktisch FCKW-frei ist und im allgemeinen aus Luft besteht, wird hierbei auf eine Temperatur über 0 °C erwärmt, so daß kein Einfrieren von nachgeschalteten Ventilen und Leitungen eintritt.

Am Ende der Austrittsleitung befindet sich wenigstens ein Aktivkohlefilter, auf dem letzte Reste an FCKW adsorbiert werden.

Nach Austritt aus dem Wärmetauscher wird das komprimierte Gas einem Vorkühler zugeführt, in dem eine Abkühlung auf 5 bis 20 °C, bevorzugt 8 bis 12 °C, z.B. 10 °C erfolgt. Hierbei scheidet sich ein Gemisch aus Wasser und FCKW (R 11) ab, das aus 0,5 bis 10 Gew.-% Wasser und 90 bis 99,5 Gew.-% Flüssiggas, bevorzugt aus 2 bis 7 Gew.-% Wasser und 93 bis 98 Gew.-% Flüssiggas besteht. Durch die weitgehende bis vollständige Abscheidung des Restwassers wird die Ablagerung von Eis in nachgeschalteten Apparaten stark vermindert bzw. verhindert. Das Gemisch kann in einem Abscheider gesammelt und in Flaschen abgefüllt werden. Letztere können z.B. an einen FCKW-Erzeuger abgegeben werden. Als Kühlmittel im Vorkühlerwird vorteilhaft CF₃-CH₂F eingesetzt. Andere geeignete Fluorkohlenwasserstoffe können jedoch ebenfalls eingesetzt werden. Das Gasgemisch strömt nun nach Verlassen des Vorkühlers in den oder die Tiefkühler und wird in diesem(n) auf - 55 bis - 115 °C, bevorzugt auf - 60 bis - 70 °C, z.B. auf - 65, - 70, - 75 °C usw. abgekühlt. Hierbei wird der Fluorchlorkohlenwasserstoff bis auf ppm-Mengen vollständig verflüssigt. Der verflüssigte FCKW wird in einem Sammelbehälter gesammelt und kann dann z.B. in spezielle Flaschen abgefüllt werden. Das FCKW-freie, kalte Gas, im allgemeinen Luft, strömt nun über eine Ventilgruppe über den bereits oben genannten, dem Vorkühler vorgeschalteten, Wärmetauscher und wird hierbei soweit erwärmt, daß nachfolgende Installationen, wie Drossel- und Entspannungsventile sowie Leitungen nicht einfrieren. Schließlich wird das Gas vor Eintritt in die Atmosphäre über wenigstens einen Aktivkohlefilter geleitet, in dem Restmengen an FCKW adsorbiert werden. Von diesen können sie nach Beladung wieder desorbiert werden.

Wird ein Tiefkühler aufgetaut, so wird erfindungsgemäß das Einsatzgasgemisch nach Kompression nicht über den oben genannten Wärmetauscher geleitet, sondern direkt in den aufzutauenden Tiefkühler geleitet. Hierbei ist es erfindungsgemäß von besonderem Vorteil, auch das Einsatzgasgemisch, das für den (die) in Betrieb befindlichen Tiefkühler vorgesehen ist, durch den aufzutauenden Tiefkühler zu leiten. Das gesamte Gas, welches das abgetaute Material umfaßt, gelangt nun in den Vorkühler, in dem eine Abkühlung wie bereits oben ausgeführt, auf 5 bis 20 °C, bevorzugt 8 bis 12 °C erfolgt. Wiederum wird Wasser/FCKW-Gemisch abgezogen. Anschließend fließt das Gasgemisch zu dem (den) in Betrieb befindlichen Tiefkühler(n), wobei wie bereits oben beschrieben, die Verflüssigung des FCKW erfolgt. Das kalte FCKW-freie Gas, im allgemeinen Luft, fließt durch einen Wärmetauscher, der von Wasser aus dem ersten Kühlkreislauf durchflossen wird, welches in diesem Kühlkreislauf zur Aufnahme von Kompressionswärme dient. Auf diese Weise wird ebenfalls verhindert, daß Vereisung im anschließenden Leitungsteil in Richtung Aktivkohlefilter auftritt.

Die erfindungsgemäße Verflüssigungsvorrichtung bzw. das erfindungsgemäße Verfahren erlauben es, auch bei Abtauvorgängen und gleichzeitigem Betrieb anderer Tiefkühler Emissionen praktisch vollständig auszuschließen. Erfindungsgemäß wurde auch gefunden, daß das R 23 als Kältemittel für die vorliegende Verwendung besonders geeignet ist.

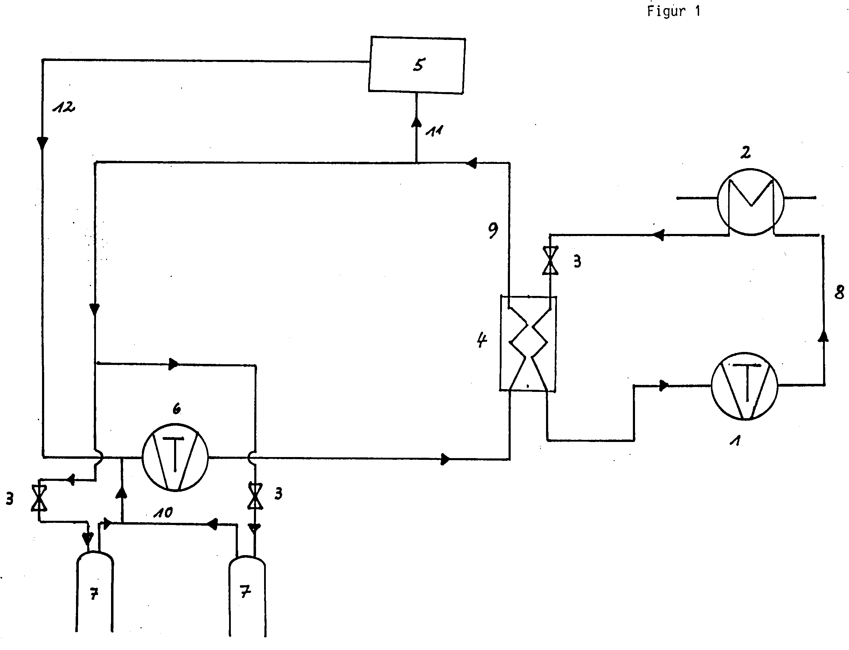

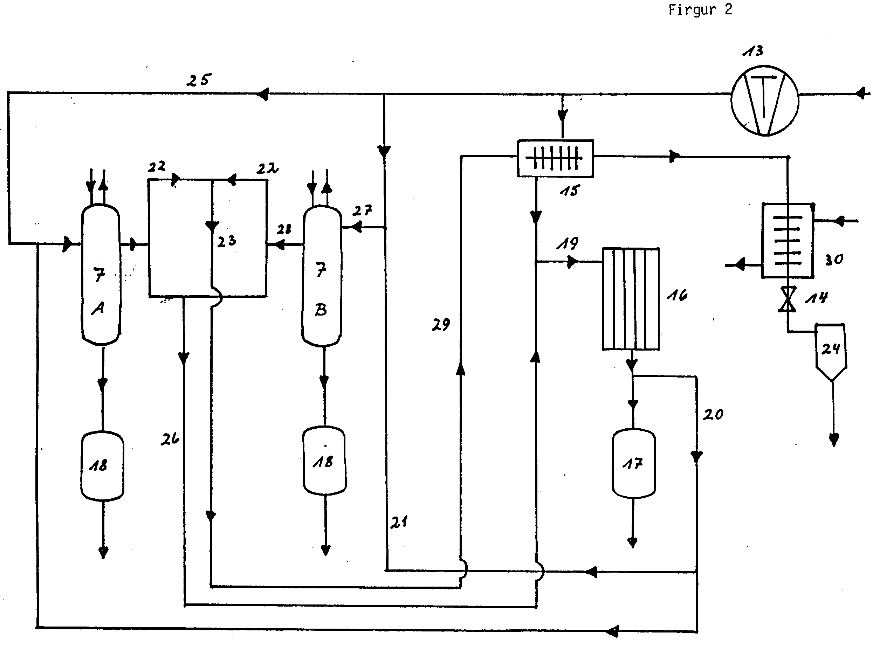

Die vorliegende Erfindung soll nunmehr anhand der Figuren 1 und 2 näher erläutert werden.

Figur 1 stellt den separaten Kühlkreislauf dar.

Figur 2 stellt das Kühlsystem zur Verflüssigung von FCKW dar.

In Figur 1 wird das Kältemittel in Kühlkreislauf (8) (1. Kühlkreislauf) in Kompressor (1) verdichtet. Abführung der Kompressionswärme erfolgt in Wärmetauscher (2). Über Entspannungsventil (3) wird das Kältemittel unter Abkühlung entspannt. In Wärmetauscher (4) wird die Kälte an Kühlkreislauf (9) abgegeben, der unter 10 bis 20 bar, bevorzugt 10 bis 15 bar steht.

Entspannung an den Ventilen (3) führt zur Abkühlung des in die Tiefkühler (7) strömenden Kältemittelsauf - 55 bis - 115 °C, bevorzugt - 60 bis - 80 °C.

Das aus den Tiefkühlem (7) über Leitungen (10) strömende Gas gelangt wieder in Kompressor (6).

Im Störfall kann das Kältemittel über (11) in den Ausgleichsbehälter (5) strömen, der mit dem Kompressor über Leitung (12) verbunden ist.

In Figur 2 wird Einsatzgemisch in Kompressor (13) komprimiert. Ventil (14) ist ein Druckhalteventil. Das komprimierte Gasgemisch gelangt über Wärmetauscher (15) und Leitung (19) in Vorkühler (16). In (17) wird verflüssigtes Wasser/FCKW-Gemisch gesammelt. Das vorgekühlte Gasgemisch gelangt über (20) bzw. (21) in die Tiefkühler (7). Dort wird das verflüssigte FCKW in den Sammelbehältern (18) gesammelt. Das FCKW-freie Gas gelangt über (22)-(23) in den Wärmetauscher (15) und wird dort erwärmt. Anschließend fließt die Luft über Aktivkohlefilter (24) in die Atmosphäre.

Soll beispielsweise Tiefkühler (7 A) aufgetaut werden, so wird das komprimierte Gas nicht über Wärmetauscher (15) geleitet, wo es abgekühlt wird, sondern über (25) direkt in Tiefkühler (7 A). Auch das Einsatzgas für den in Betrieb befindlichen Tiefkühler (7 B) wird auf diesem Wege durch (7 A) geleitet. Aus (7 A) gelangt das Gasgemisch über (26) zum Vorkühler (16). Von dort fließt das Gasgemisch über (20)-(21)-(27) in Tiefkühler (7 B), in dem wie üblich die FCKW's abgeschieden werden. Die FCKW-freie Luft fließt nun über (28)-(22)-(23)-(29) durch den nicht in Betrieb befindlichen Wärmetauscher (15). Erwärmung der kalten Luft erfolgt in Wärmetauscher (30), der mit Abwasser aus (2) gespeist wird. Anschließend tritt das Gas über Aktivkohlefilter (24) in die Atmosphäre.

## Patentansprüche

1. Verflüssigungsvorrichtung zur Verflüssigung von Gasen aus Gasgemischen, die einen separaten Kühlkreislauf zur Abkühlung eines Kältemittels aufweist, ferner ein Kühlsystem, das vom abzukühlenden Gasgemisch durchströmt wird und einen mit einem Kältemittel gekühlten Vorkühler zur Vorkühlung des Gasgemisches und einen Tiefkühler zur Verflüssigung von Gasen aufweist sowie einen Wärmetauscher aufweist, der dem Vorkühler vorgeschaltet ist und der von aus dem Kühlsystem auströmendem, kaltem Gas und im Gegenstrom von in das Kühlsystem eintretendem Gasgemisch durchströmt wird,
dadurch gekennzeichnet, daß im Kühlsystem wenigstens zwei voneinander unabhängig betreibbare Tiefkühler vorhanden sind
daß die Tiefkühler unabhängig voneinander mit vorgekühltem oder mit ungekühltem Einsatzgasgemisch befahrbar sind und
daß ein Leitungs- und Ventilsystem vorliegt, welches das Auftauen eines Tiefkühlers ohne Verlust an zu verflüssigendem Gas bei gleichzeitigem Betrieb des zweiten Tiefkühlers ermöglicht.

2. Verflüssigungsvorrichtung nach Anspruch 1, dadurch gekennzeichnet, daß das Kältemittel Trifluormethan ist.

3. Verflüssigungsvorrichtung nach wenigstens einem der Ansprüche 1 und 2, dadurch gekennzeichnet, daß das zu verflüssigende Gas im Gasgemisch Fluortrichlormethan (R 11) ist.

4. Verflüssigungsvorrichtung nach wenigstens einem der Ansprüche 1 bis 3, dadurch gekennzeichnet, daß vor dem Kühlsystem wenigstens ein Kompressor vorhanden ist und wenigstens ein Entspannungsventil zwischen Kompressor und Eintritt in das Kühlsystem.

5. Verflüssigungsvorrichtung nach wenigstens einem der Ansprüche 1 bis 4, dadurch gekennzeichnet, daß das Kältemittel für den Vorkühler eine Verbindung aus der Gruppe CF₃-CH₂F, CH₃-CHF-CF₃, CF₃-CHF₂, CH₂F₂ und CF₃-CH₃ ist oder aus deren Gemischen besteht.

6. Verflüssigungsvorrichtung nach wenigstens einem der Ansprüche 1 bis 5, dadurch gekennzeichnet, daß das Kältemittel CF₃-CH₂F ist.

7. Verflüssigungsvorrichtung nach wenigstens einem der Ansprüche 1 bis 6, dadurch gekennzeichnet, daß das Eingangsgasgemisch vor Eintritt in das Kühlsystem unter einem Druck von 5 bis 10 bar, bevorzugt 6 bis 8 bar steht.

8. Verflüssigungsvorrichtung nach wenigstens einem der Ansprüche 1 bis 7, dadurch gekennzeichnet, daß die Temperatur am Ausgang des Vorkühlers + 2 bis + 20 °C, bevorzugt + 8 bis + 12 °C beträgt.

9. Verflüssigungsvorrichtung nach wenigstens einem der Ansprüche 1 bis 8, dadurch gekennzeichnet, daß im Vorkühler und im nachgeschalteten Sammelgefäß ein Flüssigprodukt aus 0,5 bis 10 Gew.% Wasser und 90 bis 99,5 Gew.-% Flüssiggas, bevorzugt aus 2 bis 7 Gew.-% Wasser und 93 bis 98 Gew.-% Flüssiggas vorliegt.

10. Verflüssigungsvorrichtung nach wenigstens einem der Ansprüche 1 bis 9, dadurch gekennzeichnet, daß im Tiefkühler im Betrieb eine Temperatur von - 55 bis - 115 °C, bevorzugt von - 60 bis - 80 °C vorliegt.

11. Verflüssigungsvorrichtung nach wenigstens einem der Ansprüche 1 bis 10, dadurch gekennzeichnet, daß im Gasausgang aus dem Kühlsystem wenigstens ein Aktivkohlefilter angeordnet ist.

12. Verfahren zur Verflüssigung von Gasen aus Gasgemischen, bei dem in einem separaten Kühlkreislauf Kältemittel abgekühlt wird, das zur Verflüssigung von Gasen aus Gasgemischen dient und das abzukühlende Gasgemisch durch ein Kühlsystem geleitet wird, wobei dieses durch einen Vorkühler und einen Tiefkühler und ggf. durch einen dem Vorkühler vorgeschalteten Wärmetauscher strömt, durch den im Gegenstrom kaltes Gas aus dem Kühlsystem strömt, dadurch gekennzeichnet, daß die Kühlung des Gasgemisches in wenigstens zwei Tiefkühlem mit Trifluormethan als Kältemittel erfolgt, welches aus dem Kühlkreislauf in die Tiefkühler mit einer Temperatur von - 55 °C bis - 115 °C geleitet wird, daß das Gasgemisch nach Vorkühlung in wenigstens einem Vorkühler durch zwei oder mehrere voneinander unabhängige betreibbare Tiefkühler strömt, daß zum Abtauen von wenigstens einem Tiefkühler Einsatzgasgemisch ohne bzw. weitgehend ohne vorherigen Wärmetausch direkt den abzutauenden Tiefkühler durchströmt und anschließend durch den Vorkühler in wenigstens einen in Betrieb befindlichen Tiefkühler strömt und daß nach Abtrennung des Flüssiggases das Restgas aus dem Kühlsystem austritt.

13. Verfahren nach Anspruch 12, dadurch gekennzeichnet, daß aus dem Gasgemisch Fluortrichlormethan durch Verflüssigung abgetrennt wird.

14. Verfahren nach wenistens einem der Ansprüche 12 und 13, dadurch gekennzeichnet, daß bei Fahrweise ohne Abtauvorgang das Einsatzgasgemisch komprimiert wird und in das Kühlsystem unter Abkühlung entspannt wird.

15. Verfahren nach wenigstens einem der Ansprüche 12 bis 14, dadurch gekennzeichnet, daß das entspannte Gasgemisch einen Wärmetauscher durchströmt, durch den im Gegenstrom von verflüssigtem Gas befreites Kaltgas aus dem Kühlsystem strömt.

16. Verfahren nach wenigstens einem der Ansprüche 12 bis 15, dadurch gekennzeichnet, daß das entspannte Gasgemisch nach Durchströmen des Wärmetauschers durch einen Vorkühler fließt.

17. Verfahren nach wenigstens einem der Ansprüche 12 bis 16, dadurch gekennzeichnet, daß aus dem Vorkühler flüssiges Wasser/Flüssiggas-Gemisch abgezogen wird mit einem Wassergehalt von 0,5 bis 10 Gew.-% Wasser und 90 bis 99,5 Gew.-% Flüssiggas.

18. Verfahren nach wenigstens einem der Ansprüche 12 bis 17, dadurch gekennzeichnet, daß aus dem Vorkühler austretendes Gasgemisch in wenigstens einem Tiefkühler auf - 55 bis - 115 °C, bevorzugt - 60 bis - 80 °C abgekühlt wird.

19. Verfahren nach wenigstens einem der Ansprüche 12 bis 18, dadurch gekennzeichnet, daß das verflüssigte Gas aus dem Tiefkühler abgezogen wird.

20. Verfahren nach wenigstens einem der Ansprüche 12 bis 19, dadurch gekennzeichnet, daß der nicht verflüssigte Teil des Gasgemisches aus dem Tiefkühler in einem Wärmetauscher erwärmt wird, bevor es aus dem Kühlsystem durch ein Aktivkohlefilter strömt.

21. Verfahren nach wenigstens einem der Ansprüche 12 bis 20, dadurch gekennzeichnet, daß zum Verflüssigen des Gases aus dem Gasgemisch Trifluormethan als Kältemittel eingesetzt wird.
